# FASCICULE DE BREVET EUROPEEN

(11) **EP 3 123 016 B1**
(45) Date de publication et mention de la délivrance du brevet: **07.03.2018**
(21) Numéro de dépôt: 15725706.4
(22) Date de dépôt: 26.03.2015
(51) Int. Cl.: F02C 7/262, B64C 27/04, B64D 35/08, F02C 7/275, F02C 9/42, F02C 3/10, F02C 3/107, F02C 7/36

(54) **AÉRONEF COMPRENANT AU MOINS DEUX TURBOMACHINES À TURBINE LIBRE AVEC DISPOSITIF D'ASSISTANCE**
FLUGZEUG MIT ZWEI FREILAUFTURBINEN UND HILFSVORRICHTUNG
DUAL TURBOSHAFT AIRCRAFT WITH POWER ASSISTANCE DEVICE

(30) Priorité: 27.03.2014 FR 1400753
(43) Date de publication de la demande: 01.02.2017
(73) Titulaire: Safran Helicopter Engines, 64510 Bordes (FR)
(72) Inventeur: POUMAREDE, Vincent, F-65000 Tarbes (FR); KLONOWSKI, Thomas, F-64160 Sedzere (FR); MERCIER-CALVAIRAC, Fabien, F-64000 Pau (FR); SERGHINE, Camel, F-64510 Boeil-Bezing (FR)
(74) Mandataire: Healy, Erwan
(86) Numéro de dépôt international: PCT/FR2015/050767
(87) Numéro de publication internationale: WO 2015/145077

(56) Documents cités:
- EP-A1- 2 684 798
- EP-A2- 2 581 586
- WO-A2-2013/167837
- FR-A1- 2 967 133
- US-A- 5 899 411

## Description

### Contexte technique

L'invention s'inscrit dans le domaine des ensembles de plusieurs turbomachines à turbine libre, comme on en trouve couramment sur les hélicoptères.

Pour mémoire, une turbomachine à turbine libre comprend une turbine de puissance ou turbine libre qui, dans un hélicoptère, entraîne les rotors de celui-ci par l'intermédiaire d'une roue libre et d'une boîte de transmission principale (désignée dans la suite par BTP), et par ailleurs un générateur de gaz constitué principalement d'un compresseur, d'une chambre de combustion et d'une turbine haute pression (HP).

Un réducteur mécanique ou boîte d'accessoires permet de relier l'arbre du générateur de gaz à une machine électrique constituée d'un stator et d'un rotor, pouvant fonctionner indifféremment en moteur (démarreur) ou en génératrice. Dans le mode moteur, la machine électrique est alimentée par une source d'énergie électrique et développe un couple moteur de manière à entraîner en rotation le générateur de gaz de la turbomachine, notamment dans le but d'en assurer le démarrage, en effectuant ainsi une assistance au démarrage. Dans le mode génératrice, la machine électrique est entraînée en rotation par le générateur de gaz de manière à prélever sur ce dernier une puissance mécanique qui est ensuite convertie en puissance électrique.

Quand un aéronef muni de deux turbomachines est en situation de vol de croisière, il a été proposé dans les documents FR2967132 et FR2967133 de mettre une des deux turbomachines dans un régime de veille de manière à désynchroniser sa turbine libre de la boîte de transmission tout en augmentant le régime de l'autre turbomachine, ce qui permet de diminuer la consommation en carburant globale du système. Plusieurs variantes de ce régime de veille ont été proposées.

Dans une première variante, appelée « super ralenti », le générateur de gaz de la turbine à gaz désynchronisée peut être régulé à un régime de ralenti faible.

Dans une seconde variante, appelée « super ralenti assisté », le générateur de gaz de la turbine à gaz désynchronisée de la BTP peut également être régulé à un régime de ralenti faible, et simultanément un couple moteur d'assistance est appliqué au générateur de gaz par l'intermédiaire de la machine électrique et de la boîte d'accessoires.

Dans une troisième variante, la chambre de combustion de la turbomachine peut être totalement éteinte, et il est alors proposé de maintenir le générateur de gaz en rotation à une vitesse permettant de faciliter le rallumage à l'issu de la phase de vol de croisière. La gamme des vitesses adaptées peut être qualifiée de fenêtre d'allumage préférentielle. Ce mode de fonctionnement, appelé mode « vireur », est une assistance prolongée du générateur de gaz.

Dans ces trois modes de fonctionnement, qui sont susceptibles d'être maintenus pendant toute la durée de vol de croisière, la puissance transmise à la BTP par la turbomachine en veille est généralement nulle, et il n'est en général pas possible de prélever de puissance sur son générateur de gaz.

Dans les trois variantes qui viennent d'être évoquées, il est nécessaire d'être en mesure de réactiver la turbomachine désynchronisée rapidement, notamment en situation d'urgence, par exemple en cas de panne d'une autre turbomachine, s'il y a trois turbomachines ou plus au total, - ou de l'autre turbomachine si les turbomachines sont au nombre de deux. C'est notamment la raison du maintien du générateur de gaz en rotation à une vitesse facilitant le rallumage dans le système où la chambre de combustion est éteinte.

Le maintien du générateur de gaz en rotation dans la fenêtre d'allumage préférentielle (mode « vireur ») et l'assistance prolongée au générateur de gaz régulé au ralenti (mode « super ralenti assisté ») exigent quant à eux une puissance assez faible mais au final une énergie importante, l'intérêt du système résidant dans son utilisation pendant une grande durée de vol. Il a été proposé dans FR2967132 et FR2967133, entre autres solutions, d'utiliser un démarreur électrique alimenté par un démarreur/générateur relié au générateur de gaz de l'autre turbomachine, ou un générateur entrainé directement ou indirectement par la turbine libre de l'autre turbomachine.

Quant au redémarrage d'urgence à partir d'une situation de faible régime ou de chambre de combustion éteinte, il requiert d'appliquer sur l'arbre du générateur de gaz une puissance élevée en raison de l'inertie importante des ensembles tournants et du couple résistant du compresseur de la turbomachine. Cette puissance doit être délivrée pendant une durée brève, de l'ordre de quelques secondes, afin de garantir un démarrage rapide de la turbomachine. Il a été suggéré dans FR2967133 d'utiliser, entre autres solutions, une énergie électrique, en particulier un supercondensateur, qui fournit une assistance ponctuelle au générateur de gaz.

Dans le document EP2602458, il est proposé d'utiliser de la puissance prélevée sur la turbine de puissance de la première turbomachine pour assister la rotation du générateur de gaz de la deuxième turbomachine. Le transfert de puissance est effectué à l'aide de deux machines électriques. Il permet de diminuer la consommation de carburant. La deuxième turbomachine est maintenue en mode ralenti (« *idle* »).

Dans le document EP2581586, il a aussi été proposé d'utiliser deux supercondensateurs (qui sont des organes de stockage électrique), qui sont chacun chargés respectivement par un générateur électrique entraîné par le générateur de gaz d'une des deux turbomachines, et qui servent chacun, ponctuellement, pour démarrer l'autre turbomachine à partir d'un état éteint de celle-ci.

Dans le document FR2914697, une assistance ponctuelle à l'accélération est apportée au générateur de gaz d'un turbomoteur, notamment par apport de puissance mécanique sur le générateur de gaz par l'intermédiaire d'une machine électrique entrainée en rotation par la turbine libre. Le système fonctionne aussi en assistance à la décélération.

La présente invention a pour objet, dans ce contexte, de proposer une structure permettant à la fois l'alimentation continue en énergie du générateur de gaz d'une première turbomachine par l'autre turbomachine, notamment, mais pas seulement, dans le cadre d'une assistance prolongée à la rotation du générateur de gaz de ladite première turbomachine dans sa fenêtre d'allumage préférentielle, mais aussi l'utilisation d'un organe de stockage électrique chargé par une turbomachine et servant pour la fourniture ponctuelle d'énergie au générateur de gaz de la deuxième turbomachine dans le cadre du redémarrage ou de l'assistance à l'accélération de ladite deuxième turbomachine. La structure peut être de préférence mais pas nécessairement, indépendante du réseau électrique de bord (notamment autonome en terme d'alimentation électrique, mais aussi isolée galvaniquement) et facile à mettre en oeuvre en pratique dans un aéronef.

### Exposé de l'invention et avantages associés

Pour cela il est proposé un aéronef à au moins deux turbomachines à turbine libre selon la revendication 1, l'aéronef comprenant un dispositif d'assistance, le dispositif comprenant une machine électrique démarreur et une machine électrique génératrice, la machine électrique démarreur effectuant une assistance prolongée du générateur de gaz d'une première turbomachine avec de l'énergie produite par la machine électrique génératrice entraînée par la deuxième turbomachine, le dispositif d'assistance comprenant en outre au moins un organe de stockage électrique relié électriquement à ladite machine électrique démarreur pour apporter une assistance ponctuelle audit générateur de gaz, le dispositif d'assistance comprenant en outre un premier convertisseur de puissance et un deuxième convertisseur de puissance, la machine électrique démarreur étant alimentée par le premier convertisseur de puissance qui lui permet d'échanger de l'énergie avec l'organe de stockage pour l'assistance ponctuelle, et qui lui transmet de l'énergie fournie par le deuxième convertisseur de puissance pour l'assistance prolongée, où le dispositif d'assistance comprend en outre un calculateur pour couper le débit de carburant au générateur de gaz pendant une période déterminée lors de l'assistance prolongée et pour maintenir ledit générateur de gaz à une vitesse réduite facilitant un rallumage dudit générateur de gaz.

Les machines électriques évoquées peuvent, dans certaines implémentations, aussi bien fonctionner en mode moteur qu'en mode génératrice, et dans ce cas l'architecture peut être symétrique, chacune des deux turbomachines pouvant être assistée à son tour. Mais néanmoins une architecture dissymétrique est également possible, avec une assistance apportée à une seule des deux turbomachines.

Grâce à cette structure, il est possible avec un poids et un nombre de composants limités, de mettre en place les différentes fonctions d'assistance ponctuelle en vol, d'assistance ponctuelle au démarrage, d'assistance prolongée à la rotation du générateur de gaz, comme par exemple le maintien prolongé en rotation de celui-ci en l'absence de combustion dans la chambre de combustion. On peut aussi effectuer un démarrage conventionnel de la turbomachine, ou assurer la ventilation sèche de celle-ci. On rappelle que la ventilation sèche consiste à entraîner en rotation le générateur de gaz à une vitesse réduite pendant une dizaine de secondes, le débit carburant étant coupé, de manière à utiliser le flux d'air généré par le compresseur pour refroidir certains sous-ensembles internes de la turbomachine, et pour évacuer de la chambre de combustion une éventuelle accumulation de carburant imbrûlé résultant d'un défaut d'allumage lors d'un démarrage.

Le système de deux convertisseurs de puissance permet de gérer les échanges d'énergie électrique entre la machine électrique entraînée par le générateur de gaz de la première turbomachine, qui fournit en général une tension alternative, la machine électrique chargée d'apporter une assistance au générateur de gaz de la deuxième turbomachine, qui en général est aussi une machine à courant alternatif, ainsi qu'avec l'organe de stockage, qui peut notamment fournir une tension continue. Ainsi, ces deux convertisseurs permettent l'utilisation de deux sources d'énergie qui ne sont pas de même nature (courant continu ou alternatif) ou de mêmes caractéristiques (basse ou haute tension, ou fréquences différentes).

Le dispositif peut comprendre un bus, par exemple à courant continu et haute tension entre l'organe de stockage électrique et le premier convertisseur, le bus étant indépendant (isolé galvaniquement) du réseau électrique de l'aéronef. Ainsi, les exigences réglementaires relatives au réseau de bord ne s'appliquent pas au bus, et la tension du bus est distincte de la tension du réseau de bord, et est adaptée pour le stockage d'énergie dans l'organe de stockage ainsi que pour l'optimisation de la masse des machines électriques et des convertisseurs de puissance. Avantageusement, le premier convertisseur est piloté. Ainsi, le premier convertisseur permet de piloter la vitesse (fréquence) et le couple appliqués à la machine tournante démarreur (machine à courant alternatif).

Avantageusement, un organe de coupure (statique, électromécanique ou autre) permet d'isoler galvaniquement les deux convertisseurs l'un de l'autre, l'organe de stockage restant relié au premier convertisseur de puissance. Ainsi, l'organe de stockage peut transmettre de l'énergie uniquement au générateur de gaz de la première turbomachine, sans en appliquer sur le deuxième convertisseur de puissance.

Avantageusement, la première machine électrique est aussi une génératrice. Cela permet de recharger le dispositif de stockage électrique par l'énergie fournie par la première machine électrique, à travers le premier convertisseur de puissance. Avantageusement, un organe de commutation permet de relier le deuxième convertisseur de puissance à l'organe de stockage électrique. Cela permet de recharger le dispositif de stockage électrique par l'énergie fournie par la deuxième turbomachine, à travers le deuxième convertisseur de puissance.

Avantageusement, le dispositif peut être commandé, via le premier convertisseur de puissance, pour assister ponctuellement à l'aide de l'organe de stockage électrique une éventuelle accélération ou décélération commandée dudit générateur de gaz de la première turbomachine en condition de vol bimoteur. Comme exposé dans le document FR2914697, ce procédé permet d'améliorer les performances transitoires de la turbomachine, et donc de diminuer l'amplitude de la chute ou de l'augmentation de la vitesse des rotors de l'aéronef résultant d'une variation rapide de la puissance demandée à ladite turbomachine. On précise que dans le cas d'une décélération du générateur de gaz, l'assistance ponctuelle est une soustraction d'énergie, alors que dans le cadre d'une accélération du générateur de puissance, l'assistance ponctuelle est un apport d'énergie sans prélèvement d'énergie sur le réseau de bord de l'aéronef.

Avantageusement, le deuxième convertisseur de puissance est alimenté par une machine électrique fonctionnant en génératrice actionnée par le générateur de gaz d'une deuxième turbomachine de l'aéronef. Grâce à ce choix technique, on obtient un dispositif d'assistance qui peut être autonome du réseau de bord, ce qui diminue sensiblement les problématiques de perturbations électromagnétiques, notamment celles conduites par les câbles électriques, simplifie l'installation et évite de surdimensionner le réseau de bord, le système de génération électrique ou la batterie de l'aéronef. Par ailleurs le dispositif d'assistance peut être fourni par le motoriste dans le cadre d'un processus de conception et de certification distinct de celui de l'aéronef.

Par exemple, la deuxième machine électrique génératrice a également une fonction de démarreur de la deuxième turbomachine. Ainsi, on économise du poids et on diminue le nombre de dispositifs nécessaires, et on peut mettre en oeuvre un démarrage classique de la première turbomachine, ou encore la ventilation sèche de la turbomachine, à l'aide du dispositif d'assistance.

Avantageusement, le dispositif comprend un élément de stockage par turbomachine pour participer aux accélérations ponctuelles des générateurs de gaz de l'une ou l'autre des turbomachines.

Outre que chacune des deux turbomachines est ainsi munie d'une fonction d'assistance ponctuelle qui lui est propre, le fait d'avoir un élément de stockage par turbomachine permet de ségréguer électriquement les dispositifs d'assistance des deux turbomachines lorsque celles-ci participent simultanément à la propulsion de l'aéronef (vol en condition bimoteur).

Dans certaines modes de réalisation, l'assistance prolongée peut être effectuée au cours de périodes pendant lesquelles ledit générateur de gaz est maintenu en fonctionnement, l'énergie mécanique étant adaptée à maintenir ledit générateur de gaz à une vitesse réduite minimisant la consommation de carburant. Dans ce cas, le calculateur maintient le débit de carburant au générateur de gaz pendant une période déterminée lors de l'assistance prolongée et réduit la vitesse du générateur de gaz de manière à minimiser la consommation de carburant.

Enfin, l'organe de stockage électrique peut comprendre au moins un supercondensateur, un condensateur hybride, une batterie Lithium-ion ou un volant d'inertie comprenant ou non un convertisseur de puissance intégré courant continu / courant alternatif.

In est proposé, avantageusement que l'organe de stockage électrique soit rechargé par prélèvement d'énergie sur le générateur de gaz de la première ou de la deuxième turbomachine au cours de périodes pendant lesquelles ledit générateur de gaz est alimenté en carburant.

On précise qu'avantageusement, l'organe de stockage est plus particulièrement conçu pour accepter sans dommage des séquences de décharge caractérisées par une puissance élevée et une durée courte, de l'ordre de quelques secondes, et qu'à ce titre il est dédié uniquement à la fonction d'assistance ponctuelle au générateur de gaz de la turbomachine. Dans ce cadre, il sert notamment aux fonctions de démarrage normal, de démarrage d'urgence et de ventilation sèche, et à l'assistance en vol.

L'aéronef peut être un hélicoptère.

L'invention va maintenant être décrite en relation avec les figures annexées.

### Liste des figures

La figure 1 présente un schéma d'ensemble d'un système selon l'invention, intégré dans les systèmes propulsif et électrique de l'aéronef.
La figure 2 présente un schéma plus particulier d'un mode de réalisation de l'invention.
Les figures 3 à 9 présentent chacune une phase ou un mode d'utilisation du mode de réalisation de la figure 2.
La figure 10 présente un mode de réalisation alternatif de l'invention.
La figure 11 présente un autre mode de réalisation alternatif de l'invention.
Les figures 12 et 13 présentent deux autres modes de réalisation alternatifs de l'invention.

### Description détaillée

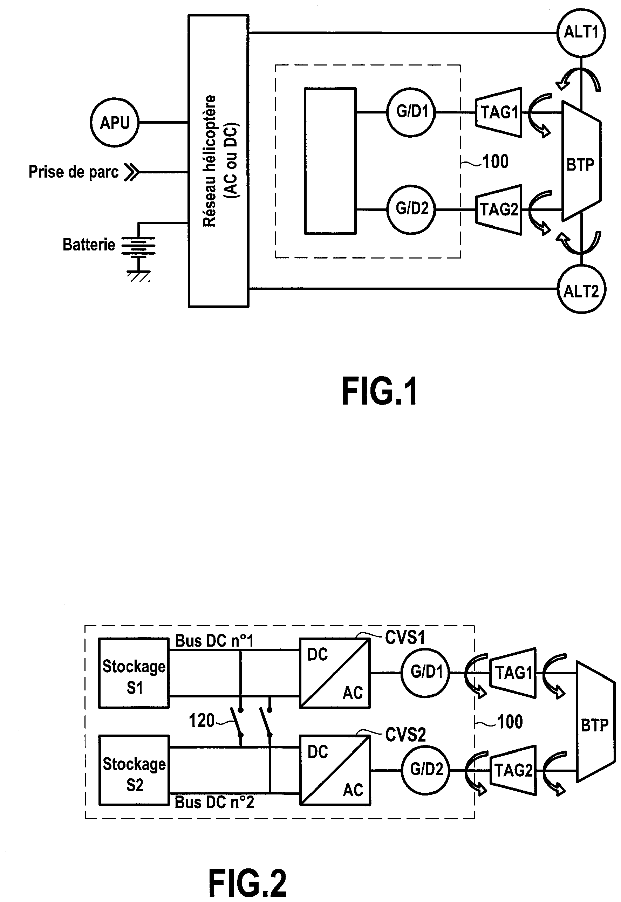

En référence à la **figure 1****,** l'architecture électrique générale d'un mode de réalisation du système proposé est la suivante.

La génération électrique de l'aéronef est assurée par au moins deux alternateurs ALT1 et ALT2 entraînés par la boîte de transmission de puissance (BTP), typiquement des machines 115VAC/400Hz de type « 3 étages », d'autres machines tournantes étant envisageables.

Cette architecture est avantageuse dans le cadre du vol de croisière économique monomoteur, car elle garantit une indépendance fonctionnelle et organique entre génération électrique et fonctionnement des turbomoteurs, permettant de ce fait de conserver un niveau suffisant de disponibilité et de redondance pour la génération électrique en vol de croisière économique, lorsque l'une des deux turbomachines est maintenue dans un régime de veille incompatible avec un quelconque prélèvement de puissance sur le générateur de gaz.

De plus cette architecture est moins pénalisante pour le fonctionnement des turbomoteurs qu'un prélèvement au niveau des générateurs de gaz des turbomoteurs, notamment en termes d'impact sur les performances d'accélération et de consommation spécifique, dans la mesure où le prélèvement mécanique correspondant à la puissance électrique consommée par le réseau de bord de l'aéronef s'effectue du côté de la turbine libre et non au niveau du générateur de gaz.

ALT1 et ALT2 alimentent le réseau électrique de l'aéronef, d'autres sources d'énergies disponibles pour alimenter ce réseau pouvant être constituées par un groupe auxiliaire de puissance embarqué (APU), une ou plusieurs batteries(s) d'accumulateurs, ou encore, au sol, une prise de parc.

La boîte de transmission de puissance BTP est entraînée par les turbomachines TAG1 et TAG2. Il s'agit ici de turbomoteurs à turbine libre. Elles comprennent chacune une turbine de puissance (turbine libre) entrainant la BTP par l'intermédiaire d'une roue libre, et un générateur de gaz.

Chaque turbomoteur TAG1 et TAG2, est équipé d'une machine tournante (G/D1 et G/D2, respectivement) apte à fonctionner en démarreur comme en générateur, et, dans le mode de réalisation présenté, mécaniquement reliée au générateur de gaz de la turbomachine par l'intermédiaire d'une boite d'accessoires. Afin d'optimiser la compacité et la masse du dispositif, on préfère pour G/D1 et G/D2 une architecture de machine compatible avec un entraînement à grande vitesse par le générateur de gaz, donc sans bobinage rotorique, telle par exemple et de manière non exhaustive une machine synchrone « *brushless »* (moteur sans balais) à aimants permanents, une machine à réluctance variable ou une machine asynchrone. Les deux machines G/D1 et G/D2 sont incluses dans un ensemble électrique autonome 100, fonctionnant indépendamment du réseau électrique de l'aéronef.

En référence à la **figure 2****,** l'ensemble électrique autonome 100 comprend les sous-ensembles suivants.

Il comprend tout d'abord deux bus, Bus n°1 et Bus n°2, à courant continu (DC) et à haute tension (de l'ordre de quelques centaines de volts), indépendants entre eux et indépendants du réseau de bord.

L'ensemble électrique autonome comprend de plus deux convertisseurs statiques de puissance DC/AC réversibles CVS1 et CVS2 (par exemple de type onduleur à deux niveaux ou autre) chargés notamment de l'alimentation et du pilotage en couple et en vitesse des machines tournantes G/D1 et G/D2. Lorsque la machine électrique est entraînée par le générateur de gaz, ces convertisseurs sont capables de fonctionner en redresseur commandé et de réguler la tension du bus correspondant.

L'ensemble électrique autonome 100 comprend de plus des organes de stockage électriques S1 et S2, optimisés pour des décharges de puissance brèves et intenses. Il peut s'agir, par exemple, de supercondensateurs ou de condensateurs hybrides (éventuellement équipés de leur système de contrôle), de batteries Li-ion (équipées de leur système de contrôle et de surveillance usuellement appelé « BMS » pour *Battery Management System* en anglais) ou d'un volant d'inertie (et son convertisseur AC/DC de charge/décharge).

L'ensemble électrique autonome 100 comprend de plus un organe électrique de coupure 120 de type contacteur électromécanique ou SSPC permettant de relier entre eux (en parallèle) les deux bus DC, et inversement d'isoler galvaniquement d'un côté l'ensemble S1, Bus 1, CVS1, G/D1, TAG1 et de l'autre côté l'ensemble S2, Bus 2, CVS2, G/D2, TAG2.

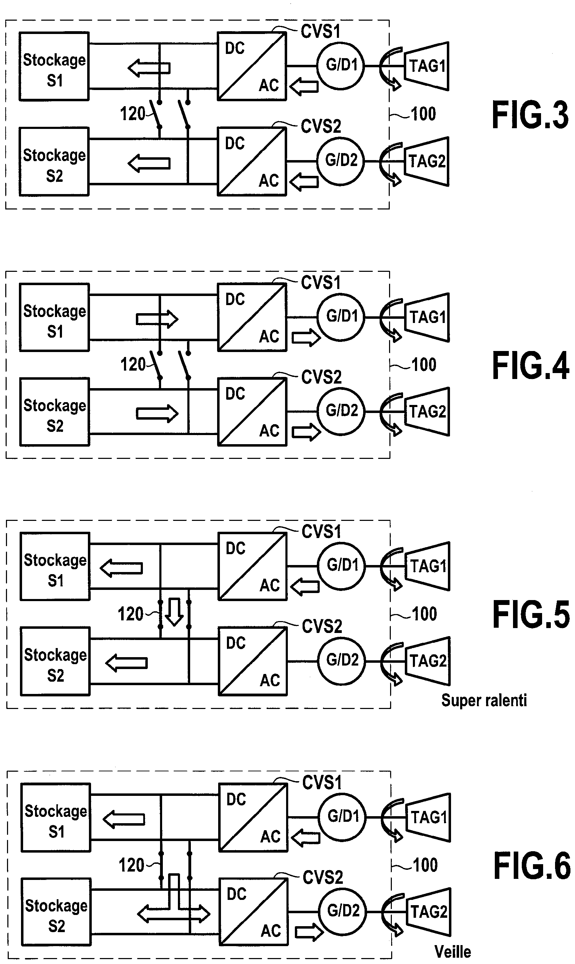

En référence à la **figure 3****,** on va décrire une phase de vol bimoteur.

Une fois les deux turbomachines TAG1 et TAG2 démarrées, les deux machines électriques G/D1 et G/D2 entraînées par les générateurs de gaz des turbomachines TAG1 et TAG2 fonctionnent en générateur et les convertisseurs DC/AC sont pilotés en redresseur selon une loi courant / tension adaptée afin de recharger et/ou de maintenir la charge des organes de stockage S1 et S2. L'organe de coupure 120 est ouvert.

Les organes de stockage ayant éventuellement été déchargés lors du démarrage au sol des turbomoteurs, il peut être nécessaire d'attendre que les organes de stockage S1 et S2 soient à nouveau chargés à leur niveau nominal avant d'autoriser le décollage.

La recharge ou le maintien de la charge des organes de stockage S1 et S2 (pour compenser les pertes internes dues par exemple à l'équilibrage des cellules d'un pack de supercapacités ou d'une batterie, ou encore les frottements d'un volant d'inertie) est assuré de manière indépendante du réseau de bord par prélèvement d'énergie sur le générateur de gaz des turbomoteurs TAG1 et TAG2 respectivement. En fonction de leur technologie, la compensation des pertes de chaque organe de stockage S1 et S2 ne représente pas plus de quelques dizaines de watts en régime permanent.

Dans ce mode de fonctionnement, les bus DC sont isolés galvaniquement l'un de l'autre et fonctionnent de manière indépendante l'un de l'autre.

D'autre part, dans une variante, on utilise une gestion séquentielle de la recharge des organes de stockage selon une loi de type hystérésis: recharge de l'organe jusqu'à atteindre un seuil de d'énergie E1, puis inhibition de la recharge (donc arrêt total du prélèvement sur le générateur de gaz) jusqu'à ce que l'énergie stockée passe - par le jeu des pertes internes - en-dessous d'un seuil E2 < E1. Avec des technologies type batterie ou capacité hybride avec circuits d'équilibrage actif, on atteint des intervalles entre deux phases de recharge assez espacées.

En référence à la **figure 4****,** en vol bimoteur, on utilise l'énergie stockée dans les organes S1 et S2 pour optimiser le fonctionnement des turbomachines. L'idée générale est de réaliser un apport transitoire d'énergie mécanique sur le générateur de gaz d'un des turbomoteurs. Deux modes de fonctionnements sont envisageables et sont détaillés ci-dessous. Ils sont présentés pour un fonctionnement avec l'organe de coupure 120 ouvert.

Tout d'abord on peut effectuer une assistance ponctuelle aux accélérations du générateur de gaz. Dans le cas d'une mise de pas rapide depuis un régime faible, un apport de puissance mécanique sur le générateur de gaz permet d'améliorer son accélération, donc d'augmenter la rapidité avec laquelle le turbomoteur délivre la puissance sur la turbine libre, et par conséquent de diminuer sensiblement la chute transitoire de la vitesse de rotation du rotor de l'hélicoptère obtenue en fin de manoeuvre, augmentant ainsi la marge de sécurité de l'équipage.

Cette fonction apporte une amélioration sensible des performances lorsque le régime initial du générateur de gaz est faible. Ce mode de fonctionnement peut être activé de manière automatique sur requête du calculateur turbine lorsque plusieurs critères sont remplis, par exemple et de manière non limitative : le système est disponible (pas de panne détectée), le niveau d'énergie stocké dans les organes S1 et S2 est suffisant, la turbomachine fonctionne, le régime initial du générateur de gaz est situé dans une plage donnée, une augmentation rapide de la demande de puissance est détectée via le rapprochement de la ligne de fonctionnement du turbomoteur de sa limite de protection contre le pompage.

L'assistance ponctuelle est désactivée lorsque la ligne de fonctionnement du turbomoteur s'éloigne de sa limite de protection contre le pompage, le niveau d'énergie stockée passe en-dessous d'un certain seuil, ou le régime passe au-dessus d'un certain seuil.

Ensuite, on peut effectuer une assistance ponctuelle aux décélérations du générateur de gaz. Dans le cas d'une baisse de pas rapide au cours de laquelle la décélération du générateur de gaz est limitée par la loi anti-extinction, il est proposé d'augmenter pendant quelques instants la consigne de génération des convertisseurs de manière à prélever une puissance importante sur les générateurs de gaz. De ce fait, il est possible de décélérer plus rapidement le générateur de gaz, donc d'augmenter la rapidité avec laquelle la régulation du turbomoteur diminue le débit de carburant injecté dans la chambre de combustion et par conséquent de diminuer l'amplitude de l'augmentation transitoire de la vitesse du rotor.

Ce mode de fonctionnement est activé automatiquement sur requête du calculateur turbine lorsque plusieurs critères sont remplis, par exemple et de manière non limitative : la ligne de fonctionnement se rapproche de la butée de débit anti-extinction, et sous réserve qu'il soit possible de stocker l'énergie prélevée sur le générateur de gaz pendant sa décélération.

Dans une variante, on surdimensionne donc légèrement la capacité de l'organe de stockage afin de ménager en toutes circonstances une marge d'énergie stockable. De manière alternative, on ajoute sur le bus DC un dispositif permettant de dissiper l'énergie de décélération du générateur de gaz, comme par exemple, un ensemble composé d'une résistance et d'un bras de hacheur de freinage.

On peut aussi effectuer une assistance ponctuelle de type injection de puissance. On injecte une puissance mécanique P_{mec} sur le générateur de gaz de manière à obtenir un effet démultiplié sur la turbine libre. Dans certaines zones du domaine de vol, il est possible de récupérer une puissance K.P_{mec} sur la turbine libre, donc sur la BTP de l'hélicoptère, avec un gain K supérieur à 1. On notera que lorsque les conditions adéquates sont réunies, une assistance sur le générateur de gaz peut donc offrir un meilleur rendement qu'une assistance équivalente mais injectée directement au niveau de la turbine libre ou de la BTP. Ce mode de fonctionnement peut être activé lorsque le niveau d'énergie stocké dans les organes S1 et S2 est suffisant, soit préventivement sur demande de l'équipage, par exemple en situation de décollage ponctuel à masse élevée et/ou en condition d'altitude et de température élevées, soit de manière automatique sur requête du calculateur du turbomoteur afin d'offrir un complément de puissance de courte durée aux régime d'urgence OEI (« One Engine Inoperative »), par exemple en cas de chute de la vitesse de la turbine libre en-dessous d'un certain seuil ou de détection de perte de puissance sur un autre turbomoteur.

En référence à la **figure 5****,** on a représenté une phase de vol de croisière économique monomoteur.

Lorsque les conditions autorisant ce mode sont réunies, ce qui implique entre autres un niveau suffisant d'énergie stockée dans les organes S1 et/ou S2, l'avionique transmet au calculateur de la turbine (TAG2 sur la figure) une consigne de mise en veille.

Dans une première variante représentée à la figure 5, qualifiée de variante « super ralenti », le calculateur de TAG2 réduit le débit carburant et régule le régime du générateur de gaz à une valeur de consigne faible, permettant de désynchroniser la turbine de puissance de la BTP (la puissance fournie à l'hélicoptère est donc nulle) et offrant une consommation faible. Simultanément la machine électrique G/D2 et le convertisseur associé CVS2 sont inhibés de manière à ne pas prélever de puissance sur le générateur de gaz de la TAG2.

La machine électrique G/D1 et son convertisseur CVS1 passent en mode « générateur » (si ce n'était pas déjà le cas) ; les deux bus DC sont électriquement connectés via la reconfiguration de l'organe de coupure 120. L'énergie prélevée sur le générateur de gaz TAG1 est utilisée pour maintenir la charge des organes de stockage S1 et S2 : cette fonction de maintien de la charge peut être réalisée de manière continue ou bien au contraire discontinue et séquentielle sur chacun des deux organes.

Dans une deuxième variante, représentée à la **figure 6****,** le calculateur de la turbomachine TAG2 coupe le débit du carburant et régule le régime du générateur de gaz à une valeur de consigne. La chambre de combustion de TAG2 étant éteinte, la consommation de carburant est nulle et la turbine libre se désynchronise de la BTP. Simultanément, la machine électrique G/D2 et le convertisseur associé CVS2 passent en mode moteur avec la consigne de vitesse définie par le régulateur et correspondant à la fenêtre d'allumage idéale de la chambre de combustion. Le générateur de gaz passe en autorotation et, après quelques secondes, sa vitesse se stabilise à cette consigne, la chambre de combustion étant éteinte. La machine électrique G/D1 et son convertisseur CVS1 passent en mode « générateur », si ce n'était pas déjà le cas.

Les deux bus DC sont électriquement connectés via la reconfiguration de l'organe de coupure 120. L'énergie prélevée sur le générateur de gaz de la turbomachine TAG1 est utilisée pour maintenir la charge des organes de stockage S1 et S2 et pour alimenter la machine électrique G/D2 par l'intermédiaire du convertisseur de puissance CVS2. Ce dernier aspect constitue une assistance prolongée au générateur de gaz de la turbomachine TAG2, appelée mode « vireur».

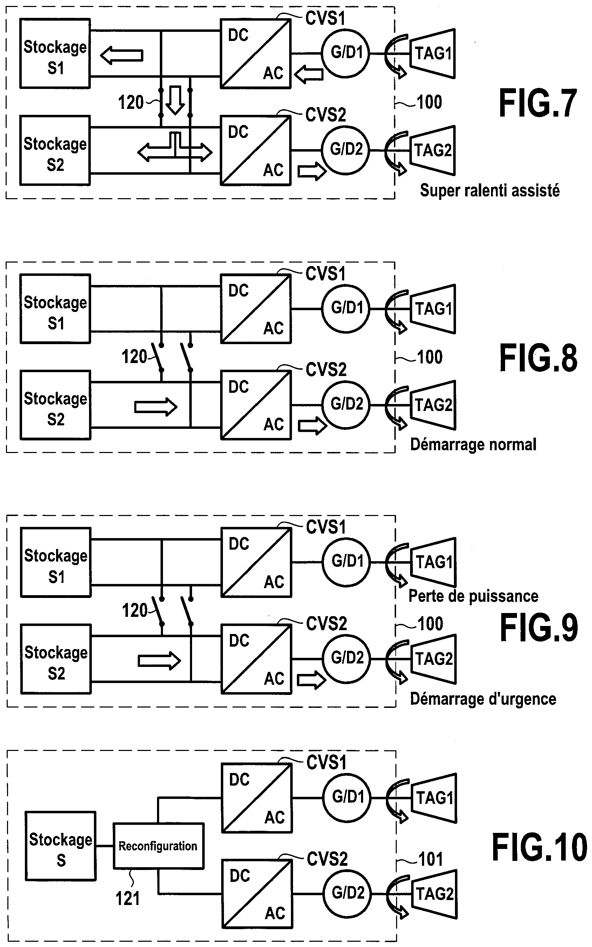

Dans une variante représentée en figure 7, le calculateur maintien l'alimentation en carburant de la turbomachine TAG2, et une assistance prolongée à la rotation du générateur de gaz de celle-ci est apportée, sur un même principe que celui présenté en figure 6. A cet effet, le calculateur régule le régime du générateur de gaz à une valeur de consigne de manière à optimiser le fonctionnement de la turbine et pour minimiser la consommation de carburant. Dans un tel mode de fonctionnement, appelé « super ralenti assisté », CVS2 et G/D2 fonctionnent en mode moteur. Pendant ces phases de fonctionnement l'ensemble électrique 100 reste autonome vis-à-vis du réseau de bord.

La sortie du vol de croisière économique monomoteur peut se faire de 2 manières différentes. Tout d'abord en référence à la **figure 8****,** lorsque le redémarrage de la TAG2 ne présente pas de caractère d'urgence, celle-ci est redémarrée sur requête de l'avionique via la procédure normale : dans un premier temps, les deux bus DC sont galvaniquement isolés via la reconfiguration de l'organe de coupure électrique 120. Si la turbomachine TAG2 était initialement maintenue en veille chambre de combustion allumée (mode « super ralenti » ou « super ralenti assisté »), la machine électrique G/D2 est commandée de manière à fournir un couple moteur afin d'assister, ponctuellement, à l'aide de l'énergie stockée dans l'organe de stockage S2, l'accélération du générateur de gaz. Simultanément, le calculateur de la turbomachine TAG2 augmente le débit carburant selon une loi prédéfinie. Si la turbomachine TAG2 était initialement maintenue en veille chambre de combustion éteinte (mode « vireur »), le calculateur initie une séquence de démarrage analogue à celle décrite ci-dessus, à ceci près que le générateur de gaz de la turbomachine TAG2 est déjà entraîné dans la fenêtre d'allumage idéale. Lorsque l'allumage de la chambre de combustion est détecté, le couple délivré par la machine électrique G/D2 est augmenté et le calculateur de la turbomachine TAG2 augmente le débit carburant selon une loi prédéfinie. Dans les deux cas, lorsque le régime NG dépasse un seuil d'autonomie, l'assistance électrique est coupée et la turbomachine TAG2 accélère par ses propres moyens jusqu'au régime de vol.

On notera qu'une séquence analogue permet de démarrer les turbomachines lorsque l'hélicoptère est au sol, avant le décollage, la différence étant que le générateur de gaz des turbomachines est initialement à l'arrêt complet. Les turbomachines sont habituellement démarrées de manière séquentielle, l'une après l'autre. Une fois les deux turbomachines démarrées, et avant le décollage, les organes de stockage S1 et S2 sont rechargés selon la procédure décrite plus (voir **la** **figure 3**).

En référence à la **figure 9****,** dans certaines conditions de vol économique monomoteur, l'équipage peut avoir besoin de la puissance de la turbomachine TAG2 rapidement : ce peut être le cas par exemple en cas de perte de puissance sur la turbomachine TAG1, ou bien en cas de besoin de puissance imprévu nécessitant la puissance des deux turbomachines et justifiant donc une sortie rapide du mode monomoteur (évitement d'obstacle etc). Dans ce cas, on procède à un redémarrage via la procédure d'urgence, l'objectif étant que la turbomachine TAG2 atteigne son régime de vol voire son régime OEI (régime *One Engine Operative,* pour régime en situation d'urgence avec un seul moteur en fonction) dans un délai court.

Dans un premier temps, les deux bus DC sont galvaniquement isolés via la reconfiguration de l'organe de coupure électrique 120. Si la turbomachine TAG2 était initialement maintenue en veille chambre de combustion allumée (mode « super ralenti » ou « super ralenti assisté »), la machine électrique G/D2 est commandée de manière à fournir un couple moteur afin d'assister ponctuellement l'accélération du générateur de gaz, cette assistance étant d'un niveau sensiblement plus élevé que pour la procédure de redémarrage normale. Simultanément, le calculateur de la turbomachine TAG2 augmente le débit carburant selon une loi prédéfinie, elle aussi optimisée pour un redémarrage rapide de la turbine.

Si la turbomachine TAG2 était initialement maintenue en veille chambre de combustion éteinte (mode « vireur »), le calculateur déclenche l'allumage de la chambre de combustion, cette opération étant facilitée par le fait que le générateur de gaz est déjà entraîné en rotation dans la fenêtre d'allumage idéale. Puis, comme précédemment, le calculateur procède à une requête en assistance électrique ponctuelle à l'accélération du générateur de gaz et augmente le débit carburant selon une loi prédéfinie, elle aussi optimisée pour un redémarrage rapide de la turbine.

Dans les deux cas, l'assistance électrique ponctuelle sur le générateur de gaz est susceptible d'être prolongée au-delà du seuil de vitesse de coupure du démarreur utilisé pour la procédure de démarrage normal, afin de minimiser la durée d'accélération de la turbomachine vers le régime de vol ou le régime OEI.

Une fois l'hélicoptère au sol, avant de couper les turbines, il peut être avisé de recharger les organes de stockage du dispositif d'hybridation électrique afin que ceux-ci soient prêts lors du démarrage ultérieur. Cette procédure peut être effectuée lors du passage obligatoire au régime « ralenti sol » utilisé pour l'homogénéisation des températures des turbomachines avant l'arrêt.

En référence à la **figure 10****,** une variante est présentée.

L'ensemble électrique autonome 101 est similaire à l'ensemble électrique autonome 100 présenté précédemment, mais un organe de stockage S unique remplace les organes de stockage S1 et S2. Il est par exemple dimensionné pour assurer le démarrage d'urgence d'une seule turbomachine. L'avantage est alors un gain pratiquement égal à 2 en termes de masse et de compacité. En mode recharge (fonctionnement bimoteur), l'une des deux convertisseurs de puissance CVS1 ou CVS2 est désigné comme « maître » par le calculateur de supervision et est chargé de la recharge de l'organe de stockage S. L'organe de reconfiguration 121 permet de relier l'organe de stockage S au convertisseur CVS2 et d'isoler galvaniquement l'ensemble S-CVS2-G/D2 de l'ensemble CVS1-G/D1 ou au contraire de relier l'organe de stockage S au convertisseur CVS1 et d'isoler galvaniquement l'ensemble S-CVS1-G/D1 de l'ensemble CVS2-G/D2, pour les phases de charge de l'organe S par l'une ou l'autre des turbomachines ou d'assistance ponctuelle à une turbomachine.

L'organe de reconfiguration 121 est également en mesure de maintenir électriquement relié l'ensemble CVS2(G/D2)-CVS1(G/D1) pour les phases de vol monomoteur impliquant l'alimentation de l'une des machines électriques pilotée en moteur par l'autre pilotée en générateur (mode « vireur » et mode « super ralenti assisté »).

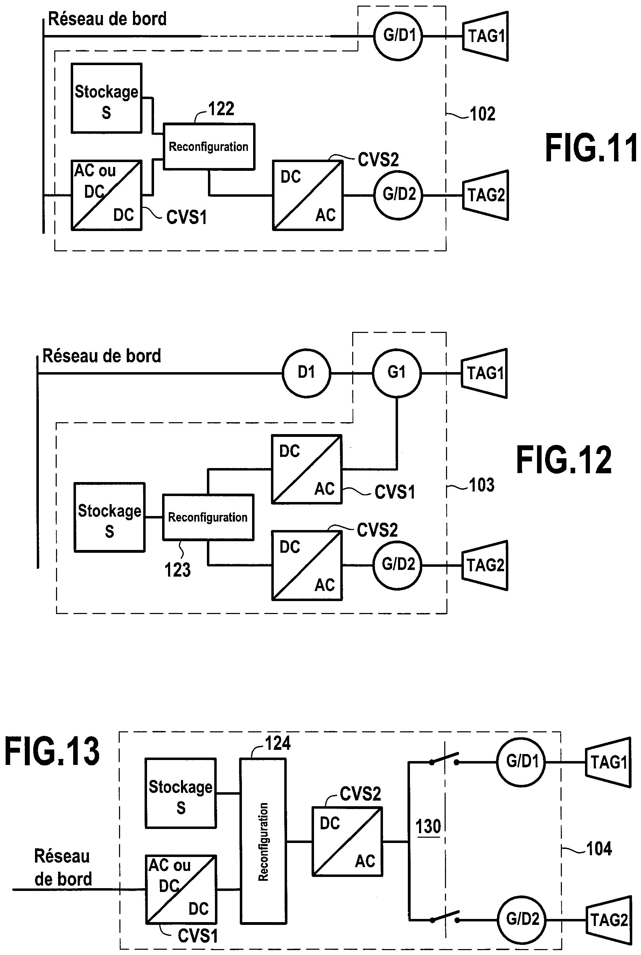

En référence à la **figure 11****,** une autre variante est présentée.

L'ensemble électrique 102 n'est cette fois pas autonome vis-à-vis du réseau de bord. La liaison électrique entre la machine électrique G/D1 et le convertisseur CVS1 emprunte en effet le réseau de bord. L'organe de stockage électrique S est unique et est dédié à l'assistance ponctuelle de la turbomachine TAG2 via le convertisseur CVS2 et la machine électrique G/D2. Il peut être chargé par le convertisseur et la machine électrique G/D1 ou par le convertisseur CVS2 et la machine électrique G/D2, en fonction notamment de la position de l'organe de reconfiguration 122. La turbomachine TAG1 n'est pas amenée à un régime de veille pendant le vol de croisière économique. Par contre la turbomachine TAG2 peut être amenée en régime de veille avec chambre de combustion allumée (mode « super ralenti assisté ») ou chambre de combustion éteinte (mode « vireur »), l'énergie électrique nécessaire à l'assistance prolongée au générateur de gaz provenant alors de la turbomachine TAG1, via G/D1, CVS1, CVS2 et G/D2, ou via ALT1, CVS1, CVS2 et G/D2 (voir ALT1 en relation avec la figure 1). Dans ce deuxième cas, G/D1 peut être remplacée par un démarreur simple, non commandé.

L'organe de reconfiguration 122 permet de relier l'organe de stockage S au convertisseur CVS2 et d'isoler galvaniquement l'ensemble S-CVS2-G/D2 de l'ensemble CVS1-réseau de bord ou au contraire de relier l'organe de stockage S au convertisseur CVS1 et d'isoler galvaniquement l'ensemble S-CVS1-G/D1 de l'ensemble CVS2-G/D2, pour les phases de charge de l'organe S ou d'assistance ponctuelle à la turbomachine TAG2.

En référence à la **figure 12****,** une autre variante est présentée. La turbomachine TAG1 dispose d'une table d'accessoires qui comporte des prises de mouvement pour deux machines électriques, ici une machine électrique démarreur D1 et une machine électrique générateur G1. La machine D1, utilisée pour le démarrage normal du turbomoteur TAG1, est alimentée par le réseau de bord, alors que la machine G1 est reliée au convertisseur CVS1. Le reste du schéma électrique est similaire à celui de la figure 9. L'organe de stockage S, unique, est dédié à l'assistance ponctuelle de la turbomachine TAG2.

L'organe de reconfiguration 123 permet de relier l'organe de stockage S au convertisseur CVS2 et d'isoler galvaniquement l'ensemble S-CVS2-G/D2 de l'ensemble CVS1-G1 ou au contraire de relier l'organe de stockage S au convertisseur CVS1 et d'isoler galvaniquement l'ensemble S-CVS1-G1 de l'ensemble CVS2-G/D2-TAG2, pour les phases de charge de l'organe S par l'une ou l'autre des turbomachines ou d'assistance ponctuelle à la turbomachine TAG2.

L'organe de reconfiguration 123 est également en mesure de maintenir relié l'ensemble CVS2(G/D2)-CVS1(G1) pour les phases de vol impliquant l'alimentation de la machine électrique G/D2 par la machine électrique G1.

L'ensemble constitué des éléments G1, CVS1, 123, S, CVS2 et G/D2 est un ensemble électrique autonome, référence 103. Il est autonome vis-à-vis du réseau de bord.

En référence à la **figure 13****,** une autre variante est présentée.

L'ensemble électrique 104 comprend un convertisseur CVS1 relié au réseau de bord. Il comprend de plus un convertisseur CVS2 relié à des organes de commutation 130 pour le relier soit à la machine électrique G/D1 reliée à la turbomachine TAG1, soit à la machine électrique G/D2 reliée à la turbomachine TAG2. Il est exclu que les deux machines électriques G/D1 et G/D2 soient reliées en même temps au convertisseur CVS2.

Un organe de reconfiguration 124 permet par ailleurs de relier l'unique organe de stockage S au convertisseur CSV1 pour sa charge par le réseau de bord, ou au convertisseur CVS2 pour l'assistance ponctuelle à l'une des turbomachines TAG1 et TAG2, en fonction de la position de l'organe de commutation 130. L'organe de stockage S peut également être relié à la fois aux deux convertisseurs CVS1 et CVS2. L'organe de reconfiguration 124 permet de relier le convertisseur CVS1 au convertisseur CVS2 pour permettre l'assistance prolongée au générateur de gaz de la turbomachine reliée au convertisseur CVS2 par l'organe de commutation 130 (notamment le mode de veille avec chambre de combustion éteinte et maintien du générateur de gaz dans la fenêtre d'allumage préférentielle, c'est-à-dire le mode « super ralenti » et le mode de veille avec chambre allumée, c'est à dire le mode « super ralenti assisté »).

On rappelle que le réseau de bord est alimenté par un ou plusieurs alternateurs actionnés, indirectement ou directement par au moins une des turbomachines TAG1 ou TAG2, et que quand l'une d'entre elles est éteinte, c'est nécessairement l'autre qui alimente de manière prolongée en énergie le réseau de bord.

L'invention n'est pas limitée aux modes de réalisation présentés, mais s'étend à toutes les variantes dans le cadre de la portée des revendications.

## Revendications

1. Aéronef à au moins deux turbomachines à turbine libre, comprenant un dispositif d'assistance (100 ; 101 ; 102 ; 103 ; 104), ledit dispositif d'assistance comprenant au moins deux turbomachines (TAG1, TAG2) à turbine libre, le dispositif comprenant une machine électrique démarreur (D1) et une machine électrique génératrice (G2), la machine électrique démarreur (D1) effectuant une assistance prolongée du générateur de gaz d'une première turbomachine (TAG1) avec de l'énergie produite par la machine électrique génératrice (G2) entraînée par la deuxième turbomachine (TAG2), le dispositif d'assistance comprenant en outre au moins un organe de stockage électrique (S1 ; S) relié électriquement à ladite machine électrique démarreur (D1) pour apporter une assistance ponctuelle audit générateur de gaz, **caractérisé en ce que** le dispositif d'assistance comprend un premier convertisseur de puissance (CVS1) et un deuxième convertisseur de puissance (CVS2), la machine électrique démarreur (D1) étant alimentée par le premier convertisseur de puissance (CVS1) qui lui permet d'échanger de l'énergie avec l'organe de stockage (S1 ; S) pour l'assistance ponctuelle, et qui lui transmet de l'énergie fournie par le deuxième convertisseur de puissance (CVS2) pour l'assistance prolongée, le dispositif d'assistance comprenant en outre un calculateur pour couper le débit de carburant au générateur de gaz pendant une période déterminée lors de l'assistance prolongée et pour maintenir ledit générateur de gaz à une vitesse réduite facilitant un rallumage dudit générateur de gaz.

2. Aéronef selon la revendication 1, dans lequel un organe de coupure permet d'isoler galvaniquement les deux convertisseurs (CVS1, CVS2) l'un de l'autre, l'organe de stockage (S1 ; S) restant relié au premier convertisseur (CVS1).

3. Aéronef selon l'une des revendications 1 à 2, dans lequel la première machine électrique (G1/D1) est aussi une génératrice.

4. Aéronef selon l'une des revendications 1 à 3, dans lequel la deuxième machine électrique (G2) est entrainée par le générateur de gaz de la deuxième turbomachine (TAG2).

5. Aéronef selon l'une des revendications 1 à 4, dans lequel un organe de commutation (120 ; 121 ; 122 ; 123 ; 124) permet de relier le deuxième convertisseur (CVS2) à l'organe de stockage électrique (S1 ; S).

6. Aéronef selon l'une des revendications 1 à 5, dans lequel le deuxième convertisseur (CVS2) est alimenté par une machine électrique génératrice (G2) actionnée par le générateur de gaz d'une deuxième turbomachine (TAG2) de l'aéronef.

7. Aéronef selon l'une des revendications 1 à 6, dans lequel l'organe de stockage électrique (S1 ; S) peut être utilisé pour assister une éventuelle accélération ou décélération commandée dudit générateur de gaz en condition de vol bimoteur.

8. Aéronef selon l'une des revendications 1 à 7, comprenant un élément de stockage (S1, S2) par turbomachine (TAG1, TAG2) pour participer aux accélérations ponctuelles des générateurs de gaz de l'une ou l'autre des turbomachines (TAG1, TAG2).

9. Aéronef selon l'une des revendications 1 à 8, dans lequel le calculateur maintient le débit de carburant au générateur de gaz pendant une période déterminée lors de l'assistance prolongée et réduit la vitesse du générateur de gaz de manière à minimiser la consommation de carburant.

10. Aéronef selon l'une des revendications 1 à 9, dans lequel l'organe de stockage électrique (S1 ; S) comprend un supercondensateur, un condensateur hybride, une batterie Lithium-ion ou un volant d'inertie comprenant un convertisseur intégré courant continu / courant alternatif.

11. Aéronef selon l'une des revendications 1 à 10, dans lequel l'organe de stockage électrique (S1 ; S) est rechargé par prélèvement d'énergie sur le générateur de gaz de la première ou de la deuxième turbomachine (TAG1 ; TAG2) au cours de périodes pendant lesquelles ledit générateur de gaz est alimenté en carburant.

## Patentansprüche

1. Luftfahrzeug mit wenigstens zwei Turbomaschinen mit Freilaufturbine, umfassend eine Hilfsvorrichtung (100; 101; 102; 103; 104), wobei die Hilfsvorrichtung wenigstens zwei Turbomaschinen (TAG1, TAG2) mit Freilaufturbine umfasst, wobei die Vorrichtung eine elektrische Starter-Maschine (D1) und eine elektrische Generator-Maschine (G2) umfasst, wobei die elektrische Starter-Maschine (D1) eine längere Unterstützung des Gasgenerators einer ersten Turbomaschine (TAG1) mit Energie, die durch die über die zweite Turbomaschine (TAG2) angetriebene elektrische Generator-Maschine (G2) erzeugt wird, vollzieht, wobei die Hilfsvorrichtung ferner wenigstens ein Stromspeicherorgan (S1; S) umfasst, das mit der elektrischen Starter-Maschine (D1) elektrisch verbunden ist, um den Gasgenerator punktuell zu unterstützen,
**dadurch gekennzeichnet, dass** die Hilfsvorrichtung einen ersten Leistungswandler (CVS1) und einen zweiten Leistungswandler (CVS2) umfasst, wobei die elektrische Starter-Maschine (D1) durch den ersten Leistungswandler (CVS1) versorgt wird, der ihr ermöglicht, für die punktuelle Unterstützung mit dem Speicherorgan (S1; S) Energie auszutauschen, und der, für die längere Unterstützung, durch den zweiten Leistungswandler (CVS2) gelieferte Energie auf sie überträgt, wobei die Hilfsvorrichtung ferner einen Rechner umfasst, um den Treibstoffzufluss zu dem Gasgenerator während eines bestimmten Zeitraums bei der längeren Unterstützung zu unterbrechen und um den Gasgenerator auf einer reduzierten Geschwindigkeit zu halten, die ein Wiederzünden des Gasgenerators erleichtert.

2. Luftfahrzeug nach Anspruch 1, bei dem ein Trennorgan ermöglicht, die beiden Wandler (CVS1, CVS2) galvanisch voneinander zu trennen, wobei das Speicherorgan (S1 ; S) mit dem ersten Wandler (CVS1) verbunden bleibt.

3. Luftfahrzeug nach einem der Ansprüche 1 bis 2, bei dem die erste elektrische Maschine (G1/D1) auch ein Generator ist.

4. Luftfahrzeug nach einem der Ansprüche 1 bis 3, bei dem die zweite elektrische Maschine (G2) durch den Gasgenerator der zweiten Turbomaschine (TAG2) angetrieben wird.

5. Luftfahrzeug nach einem der Ansprüche 1 bis 4, bei dem ein Umschaltorgan (120; 121; 122; 123; 124) ermöglicht, den zweiten Wandler (CVS2) mit dem Stromspeicherorgan (S1; S) zu verbinden.

6. Luftfahrzeug nach einem der Ansprüche 1 bis 5, bei dem der zweite Wandler (CVS2) durch eine elektrische Generator-Maschine (G2), welche durch den Gasgenerator einer zweiten Turbomaschine (TAG2) des Luftfahrzeugs angetrieben wird, versorgt wird.

7. Luftfahrzeug nach einem der Ansprüche 1 bis 6, bei dem das Stromspeicherorgan (S1; S) verwendet werden kann, um eine mögliche gesteuerte Beschleunigung oder Abbremsung des Gasgenerators unter zweimotoriger Flugbedingung zu unterstützen.

8. Luftfahrzeug nach einem der Ansprüche 1 bis 7, umfassend ein Speicherelement (S1, S2) pro Turbomaschine (TAG1, TAG2), um an den punktuellen Beschleunigungen der Gasgeneratoren der einen oder der anderen der Turbomaschinen (TAG1, TAG2) beteiligt zu sein.

9. Luftfahrzeug nach einem der Ansprüche 1 bis 8, bei dem der Rechner den Treibstoffzufluss zu dem Gasgenerator während eines bestimmten Zeitraums bei der längeren Unterstützung aufrechterhält und die Geschwindigkeit des Gasgenerators reduziert, um den Treibstoffverbrauch zu minimieren.

10. Luftfahrzeug nach einem der Ansprüche 1 bis 9, bei dem das Stromspeicherorgan (S1; S) einen Superkondensator, einen Hybridkondensator, eine Lithium-Ionen-Batterie oder ein Schwungrad mit einem integrierten Gleichstrom-Wechselstrom-Wandler umfasst.

11. Luftfahrzeug nach einem der Ansprüche 1 bis 10, bei dem das Stromspeicherorgan (S1; S) durch Energieentnahme an dem Gasgenerator der ersten oder der zweiten Turbomaschine (TAG1; TAG2) in Zeiten, während derer der Gasgenerator mit Treibstoff versorgt wird, wieder aufgeladen wird.

## Claims

1. An aircraft having at least two free-turbine engines comprising an assistance device (100; 101; 102; 103; 104), the assistance device comprising an electrical starter machine (D1) and an electric generator machine (G2), the electrical starter machine (D1) providing prolonged assistance to the gas generator of a first engine (GT1) using energy produced by the electric generator machine (G2) driven by the second engine (GT2), the assistance device further comprising at least one electricity storage member (S1; S) electrically connected to said electrical starter machine (D1) for providing a burst of assistance to said gas generator, a first power converter (SPC1) and a second power converter (SPC2), the electrical starter machine (D1) being powered by the first power converter (SPC1) that enables it to exchange energy with the storage member (S1; S) for providing the burst of assistance, and that transmits thereto the energy supplied by the second power converter (SPC2) for the prolonged assistance, the assistance device further comprising a computer for cutting off the flow of fuel to the gas generator during a determined period during the prolonged assistance and for maintaining said gas generator at a reduced speed for facilitating re-ignition of said gas generator.

2. An aircraft according to claim 1, wherein a disconnector member enables the two converters (SPC1, SPC2) to be electrically isolated from each other, the storage member (S1; S) remaining connected to the first converter (SPC1).

3. An aircraft according to claim 1 or claim 2, wherein the first electrical machine (G1/S1) is also a generator.

4. An aircraft according to any one of claims 1 to 3, wherein the second electrical machine (G2) is driven by the gas generator of the second engine (GT2).

5. An aircraft according to any one of claims 1 to 4, wherein a switch member (120; 121; 122; 123; 124) enables the second converter (SPC2) to be connected to the electrical storage member (S1; S).

6. An aircraft according to any one of claims 1 to 5, wherein the second converter (SPC2) is powered by a generator electrical machine (G2) driven by the gas generator of a second engine (GT2) of the aircraft.

7. An aircraft according to any one of claims 1 to 6, wherein the electricity storage member (S1; S) can be used, where appropriate, for assisting in controlled acceleration or deceleration of said gas generator under twin-engined flight conditions.

8. An aircraft according to any one of claims 1 to 7, including one storage element (S1, S2) per engine (GT1, GT2) in order to participate in burst accelerations of the gas generators of either of the engines (GT1, GT2).

9. An aircraft according to any one of claims 1 to 8, wherein the computer maintains the flow of fuel to the gas generator for a determined period during prolonged assistance and it reduces the speed of the gas generator so as to minimize fuel consumption.

10. An aircraft according to any one of claims 1 to 9, wherein the electricity storage member (S1; S) comprises a supercapacitor, a hybrid competitor, a lithium-ion battery, or a flywheel having an integrated DC/AC converter.

11. An aircraft according to any one of claims 1 to 10, wherein the electricity storage member (S1; S) is recharged by taking energy from the gas generator of the first or second engine (GT1; GT2) during periods in which said gas generator is supplied with fuel.
